# EUROPÄISCHE PATENTANMELDUNG

(11) **EP 1 065 491 A2**
(43) Veröffentlichungstag der Anmeldung: **03.01.2001**
(21) Anmeldenummer: 00112454.4
(22) Anmeldetag: 10.06.2000
(51) Int. Cl.: G01N 1/22

(54) **Gasprobenahmebehälter mit Verdampfungseinrichtung**

(30) Priorität: 30.06.1999 DE 19930040
(71) Anmelder: MESSER GRIESHEIM GMBH, 60547 Frankfurt (DE)
(72) Erfinder: Franken, Hartmut, 47829 Krefeld (DE); Henrich, Helmut, 50259 Pulheim (DE); Herzog, Friedhelm, Dr., 47799 Krefeld (DE); Neu, Peter, Dr., 47228 Duisburg (DE); Kruell, Joachim, 47138 Duisburg (DE)

(57) **Zusammenfassung**

Die Vorrichtung (1) zur Probenahme eines Gases aus einem Behälter mit verflüssigtem Gas enthält eine vor einem Probebehälter (7) angeordnete Verdampfereinheit (5). Darüberhinaus enthält die Vorrichtung (1) vorzugsweise einen Strömungsbegrenzer (4), eine Abblasvorrichtung (11), einen Halterahmen (12) und gegebenenfalls einen oder mehrere Sensoren. Die Vorrichtung wird beispielsweise zur Probenahme bei Tankfahrzeugen mit verflüssigtem Gas wie tiefkalt verflüssigtem Sauerstoff eingesetzt.

## Beschreibung

Die Erfindung betrifft eine Vorrichtung zur Probenahme eines Gases aus einem Behälter mit verflüssigtem Gas, deren Verwendung zur Gasprobenahme bei einem Tankfahrzeug für verflüssigtes Gas und ein Verfahren zur Gasprobenahme aus Behältern mit verflüssigtem Gas.

Eine Qualitätsüberprüfung von in Tankfahrzeugen angelieferten tiefkalt verflüssigten Gasen wird bisher nicht durchgeführt. Will man eine Qualitätsüberprüfung vor der Abtankung des verflüssigten Gases beim Kunden vornehmen, so könnte eine flüssige Probe zur Analyse entnommen werden. Dies erfordert teuere superisolierte Behälter, lange Spülzeiten und große Spülgasmengen.

Im Speicherbehälter (Tank) des Tankfahrzeuges für verflüssigte Gase besteht in der Regel über der flüssigen Phase des verflüssigten Gases ein Gasraum mit einem Betriebsüberdruck von ca. 3 bar. Aus diesem Gasraum können gasförmige Proben, z. B. über eine Gasleitung, entnommen werden. Wird eine Gasprobe in einem Probebehälter gesammelt, so muß aus Sicherheitsgründen immer gewährleistet sein, daß keine flüssigen Anteile des verflüssigten Gases in den Probebehälter gelangen, da sich sonst gefährliche Drücke in dem Probebehälter aufbauen können. Es ist aber nicht auszuschließen, daß bei einer ungünstigen Aufstellung des Tankfahrzeuges, beispielsweise an einem Hang, Flüssigkeit in die Gasleitung gelangt.

Der Erfindung liegt die Aufgabe zugrunde, eine Vorrichtung zur Gasprobenahme bereitzustellen, die die genannten Probleme vermeidet. Als weitere Aufgabe ist ein einfaches und sicheres Verfahren für die Gasprobeentnahme aus Transport- oder Speicherbehältern mit verflüssigtem Gas zu schaffen.

Gelöst wurde die Aufgabe durch eine Vorrichtung zur Probenahme eines Gases aus einem Behälter mit verflüssigtem Gas mit einer vor einem Probebehälter angeordneten Verdampfungseinrichtung und ein Verfahren, bei dem Gas für eine Probenahme durch eine einem Probebehälter vorgeschalteten Verdampfungseinrichtung geleitet wird.

Bei der Überführung einer gasförmigen Probe aus einem Transport- oder Speicherbehälter mit verflüssigtem Gas in den Probebehälter der Vorrichtung gelangt das Gas mit möglichen Anteilen von verflüssigtem Gas zunächst in eine dem Probebehälter vorgeschalteten Verdampfungseinrichtung, in der die Anteile mit verflüssigtem Gas verdampfen. Damit wird sichergestellt, daß kein verflüssigtes Gas in den Probenbehälter gelangt. Ein gefährlicher Überdruck in dem nach der Probenahme geschlossenen Probebehälter kann somit nicht entstehen.

Verflüssigte Gase sind in der Regel durch Kälte und/oder Druck verflüssigte Gase, z. B. tiefkalt verflüssigte (kälteverflüssigte) Gase wie tiefkalt verflüssigter Stickstoff (abgekürzt LN) oder tiefkalt verflüssigter Sauerstoff (abgekürzt LOX) oder druckverflüssigte Gase wie Lachgas, Propan oder Butan. Bevorzugt wird die Probenahmevorrichtung zur Entnahme von Gasproben aus Speicherbehältern von Tankfahrzeugen, insbesondere mit tiefkalt verflüssigtem Sauerstoff, eingesetzt.

Die Vorrichtung zur Probenahme gasförmiger Proben aus einem Speicher- oder Transportbehälter mit verflüssigtem Gas enthält in der Regel einen verschließbaren Probebehälter mit einer vorgeschalteten Verdampfungseinrichtung. Vor der Verdampfungseinrichtung ist im allgemeinen eine Anschlußleitung mit Anschlußkupplung und vorteilhaft ein Strömungsbegrenzer angeordnet. Der Probebehälter ist vorzugsweise mit einem Gaseingang und einem Gasausgang mit jeweils einem Absperrorgan versehen. Die Vorrichtung enthält bevorzugt eine Abblasvorrichtung als Überdrucksicherung wie eine Berstscheibe oder ein Überdruck- oder Abblasventil. Die Abblasvorrichtung wird in der Regel im Bereich des Probebehälters, z. B. vor dem Gasausgangsventil am Probebehälter, angeordnet. Besonders vorteilhaft wird die Probenahmevorrichtung durch eine Haltevorrichtung oder Stützvorrichtung (z. B. Halterahmen oder Gehäuse, vorzugsweise offen) stabilisiert. Bevorzugt wird die Probenahmevorrichtung mit einem Halterahmen ausgerüstet. Die Haltevorrichtung hat Stütz- und Schutzfunktion.

Der Probebehälter umfaßt ein Volumen (gleich Volumen der Gasprobe), gemessen von Absperrorgan zu Absperrorgan, im Bereich von z. B. 0,1 bis 5 Liter, vorzugsweise 0,1 bis 1 Liter, besonders bevorzugt 0,15 bis 0,5 Liter, insbesondere 0,3 Liter. Ein geeigneter Probebehälter ist beispielsweise ein zylindrischer Behälter mit einem Gesamtvolumen von 300 ml und einem zulässigen Betriebsdruck von 124 bar (z. B. Gaszylinder "4HDM300" der Fa. Hoke, Frankfurt/M.). In der Regel befinden sich in unmittelbarer Nähe des Probebehälters oder am Probebehälter ein Absperrorgan gaseingangsseitig und ein Absperrorgan gasausgangsseitig. Die Absperrorgane sind in der Regel Absperrventile oder Durchgangsventile, z. B. Typ DN 4,3 oder DN 5,5 der Firma Hoke (Frankfurt/M.). Vorteilhaft werden steuerbare Absperrorgane wie Pneumatikventile oder Magnetventile eingesetzt, wodurch sich die Gasprobenahme automatisieren läßt. Die steuerbaren Absperrorgane sind in der Regel mit einer Steuereinheit verbunden, die beispielsweise in der Vorrichtung oder am Tankfahrzeug angeordnet ist. Die Vorrichtung kann weitere steuerbare oder nicht steuerbare Absperrorgane enthalten, z. B. im Eingangs- und Ausgangsbereich der Vorrichtung.

Die Verdampfungseinrichtung verhindert das Eindringen gefährlicher Mengen von verflüssigtem Gas in den Probebehälter. Vorzugsweise wird durch die Verdampfungseinrichtung sichergestellt, daß kein verflüssigtes Gas in den Probebehälter gelangt. Im allgemeinen ist eine Verdampfungseinrichtung im Prinzip ein Wärmetauscher, z. B. ein verlängerter Gasleitungsweg wie eine Verdampferschlange. Die Verdampferschlange ist im allgemeinen ein zylindrisch gewundener oder helical geformter Gasleitungsabschnitt. Die Verdampferschlange besteht z. B. aus Edelstahl- oder Kupferrohr, in der Regel aus Gasleitungsrohr. Die Verdampfungseinrichtung arbeitet in der Regel ungeheizt, also mit der Umgebungstemperatur, kann aber auch geheizt werden, z. B. mit einer geregelten oder ungeregelten elektrischen Widerstandsheizung.

Die Vorrichtung enthält vorteilhaft einen Strömungsbegrenzer, z. B. eine Lochblende oder eine Leitungsverengung. Der Strömungsbegrenzer ist so beschaffen, daß das Gas bei der Probenahme nur mit geringer Geschwindigkeit durch die Vorrichtung fließen kann. Der resultierende Gasvolumenstrom liegt üblicherweise im Bereich von 0,1 bis 0,5 Liter pro Minute und ist in der Regel auch abhängig von den anderen eingesetzten Teilen der Probenahmevorrichtung. Der Strömungsbegrenzer wird in der Regel am Gaseingang, das heißt vor der Verdampfereinrichtung und vor dem Probebehälter, vorzugsweise im näheren Bereich des Anschlußteiles, angeordnet. Vorteilhaft wird eine Lochblende als Strömungsbegrenzer in ein Schraubverbindungsstück mit beidseitigem Gewindeanschluß (Anschlußverschraubung) oder in das Anschlußteil integriert. Eine als Strömungsbegrenzer eingesetzte Blende (Drossel) hat beispielsweise einen Lochdurchmesser im Bereich von 0,1 bis 3 mm, vorzugsweise um 1 mm.

Der Strömungsbegrenzer kann auch z. B. aus einem fest eingestellten Teil (z. B. Blende) zur Vorgabe eines maximal möglichen Gasvolumenstromes und einem einstellbaren Teil zur Regulierung des Gasvolumenstroms (z. B. ein Ventil) bestehen.

Die meisten Teile der Probenahmevorrichtung wie Gasleitungen, Anschlußteil (z. B. Kupplungsteil), Verdampfereinrichtung und Probebehälter bestehen in der Regel aus Metall, z. B. Edelstahl, Aluminium, Kupfer, Messing oder andere gebräuchliche Metalle oder Legierungen. Die Teile der Probenahmevorrichtung sind lösbar (z. B. Verschraubung) oder unlösbar (z. B. gelötet oder geschweißt) miteinander verbunden.

Die Gasleitungen oder Gasrohre bestehen beispielsweise aus Edelstahlrohr mit einem innerem Durchmesser von 2 bis 10 mm, vorzugsweise 4 bis 8 mm, insbesondere 4 mm.

Das Anschlußteil der Probenahmevorrichtung erlaubt vorzugsweise einen direkten Anschluß an den Tankausgang (Füllanschluß) eines Tankfahrzeuges, insbesondere eines LOX-Tankwagens. Der Anschluß kann auch über einen Adapter erfolgen. Besonders vorteilhaft ist ein Anschlußteil, das erst nach gasdichtem Anschluß an die Gasquelle öffnet, also ein Anschlußteil mit integriertem Ventil. Solche öffnenden Anschlußteile sind im Prinzip von Druckdosen her bekannt. Mit Hilfe eines solchen Anschlußteiles kann ein Eindringen von Feuchtigkeit in die Probenahmevorrichtung verhindert und somit Schwierigkeiten infolge ausfrierender Feuchtigkeit vermieden werden.

Die Vorrichtung enthält vorteilhaft einen oder mehrere Sensoren, z. B. einen Gasvolumenstromsensor, einen Temperatursensor oder Drucksensor. Die Sensoren können zur Auslösung eines Alarms bei gefährlichen Betriebsbedingungen und/oder zur Steuerung von Betriebsfunktionen der Vorrichtung, insbesondere bei einer Vorrichtung zur automatischen oder teilautomatischen Gasprobenahme. Ein Sensor im Gaseingangsbereich, insbesondere ein Temperatursensor, wird vorteilhaft zur Erfassung von eindringendem verflüssigten Gas eingesetzt. Der Sensor dient besonders vorteilhaft zu einer Grenzwertüberwachung und/oder zur Steuerung. Beispielsweise wird bei einer kritischen Menge von eindringendem Gas ein Signal abgegeben, wodurch ein Alarm ausgelöst wird und gegebenenfalls ein steuerbares Absperrventil im Gaseingangsbereich der Vorrichtung geschlossen wird.

Ein weiterer Gegenstand der Erfindung ist eine Probenahmevorrichtung in Kompaktbauweise. Die kompakte Bauweise wird dadurch erreicht, daß eine Verdampferschlange als Verdampfereinheit eingesetzt wird und die Windungen der Verdampferschlange um den Probebehälter geführt werden, wobei die Verdampferschlange dem Probebehälter vorgeschaltet ist. Der Probebehälter ist vorzugsweise zylinderförmig. Die Vorrichtung enthält vorzugsweise eine Haltevorrichtung, insbesondere einen Halterahmen.

Ein weiterer Gegenstand der Erfindung ist ein Verfahren zur Gasprobenahme aus Behältern mit verflüssigtem Gas, das dadurch gekennzeichnet ist, daß das Gas durch eine Verdampfereinheit geleitet wird, die dem Probebehälter vorgeschaltet ist. Das Verfahren wird vorteilhaft durch Verwendung einer Probenahmevorrichtung gemäß der Erfindung oder durch entsprechende Verwendung von Einzelteilen wie separater Verdampfungseinrichtung und separatem Probebehälter durchgeführt.

Bei dem Verfahren wird in der Regel vor der eigentlichen Probenahme Gas mit einem Gasvolumenstrom im Bereich beispielsweise von 0,1 bis 10 Liter pro Minute, vorzugsweise 0,1 bis 1 Liter pro Minute, zum Spülen durch die Vorrichtung geleitet (Spülen der Vorrichtung mit dem zu analysierenden Gas). Nach dem Spülen werden die Absperrorgane am Probebehälter verschlossen. Die Gasprobe ist damit genommen.

Die Erfindung wird anhand der Zeichnung erläutert.
Fig. 1 zeigt ein Schema der Probenahmevorrichtung.
Fig. 2 zeigt ein Beispiel (schematisch) einer bevorzugten Ausführungsform der Probenahmevorrichtung (Seitenansicht).
Fig. 3 zeigt die Probenahmevorrichtung von Fig. 2 in der Draufsicht.

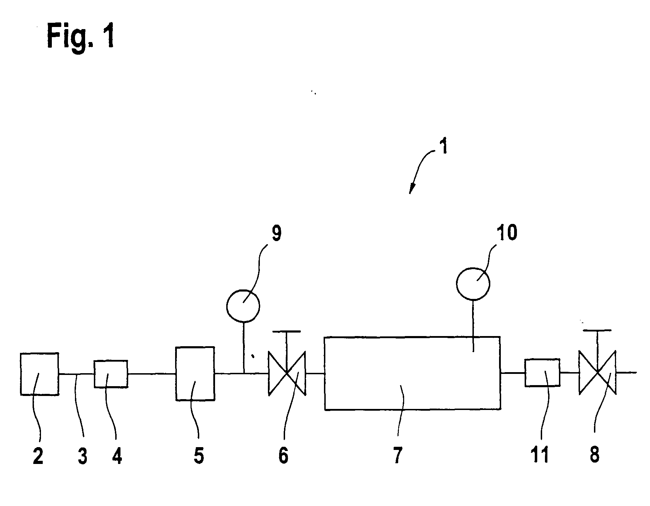

Das Schema einer Probenahmevorrichtung 1 in Fig. 1 zeigt das Anschlußteil 2, die Gasleitung 3, den Strömungsbegrenzer 4, die Verdampfungseinrichtung 5, das gaseingangsseitige Absperrorgan 6, den Probebehälter 7, eine Abblaseinrichtung 11 und gasausgangsseitig das Absperrorgan 8. Vorteilhaft enthält die Vorrichtung 1 einen Sensor für den Gasvolumenstrom 9 und einen Temperatursensor 10. Der Strömungsbegrenzer 4 kann vorteilhaft im Anschlußteil 2 integriert werden. Über das Anschlußteil 2 wird die Probenahmevorrichtung 1 beispielsweise an den Füllanschluß eines Tankwagens angeschlossen. Vom Füllanschluß des Tankwagens führen im allgemeinen eine verschließbare Leitung zum (oberen) Gasraum des Tanks und eine verschließbare Leitung zum (unteren) Flüssigkeitsraum des Tanks (Speicherbehälter am Tankwagen). Zur Gasprobenahme wird die Leitung zum Flüssigkeitsraum geschlossen und die Leitung zum Gasraum des Tanks geöffnet, so daß bei geöffneten Absperrorganen 6 und 8, in der Regel Absperrventile, die angeschlossene Probenahmevorrichtung 1 mit Gas gespült wird. Das Spülen mit Gas erfolgt beispielsweise über einen Zeitraum von einer bis zwei Minuten. Danach werden die Absperrorgane 6 und 8 für die eigentliche Gasprobenahme geschlossen. Danach wird die Leitung zum Gasraum des Tanks geschlossen und die Probenahmevorrichtung mit der Gasprobe vom Füllanschluß des Tankwagens abgenommen.

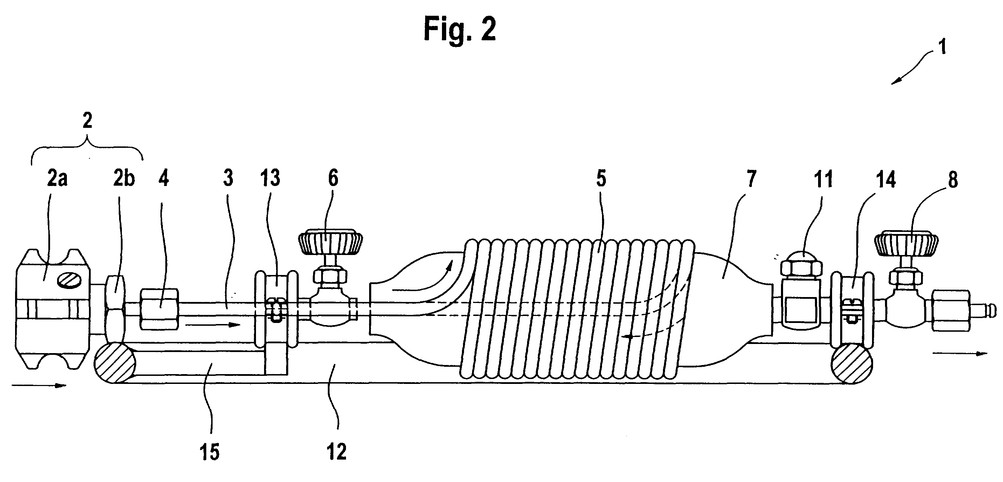

Fig. 2 zeigt ein Beispiel einer Probenahmevorrichtung 1 in kompakter Bauweise. Um den zylinderförmigen Körper des Probebehälters 7 werden Gasleitungsschleifen geführt, die die Verdampfungseinrichtung 5 bilden (Verdampferschlange). Das Anschlußteil 2 wird vorzugsweise aus einer Anschlußkupplung 2a und einem Reduzierstück 2b, das Reduzierstück in der Regel mit Außensechskant, gebildet. Das Gas, das verflüssigtes Gas enthalten kann, wird durch das Anschlußteil 2 und den Strömungsbegrenzer 4 zur Verdampfungseinheit 5 geführt und gelangt von dort durch das geöffnete Absperrorgan 6 in den Probebehälter 7. Die gasführenden Teile sind in der Regel durch Verschraubungen verbunden. Die Probenahmevorrichtung wird durch den Halterahmen 12 (z. B. aus Edelstahl-Rundstab) stabilisiert. Die Probenahmevorrichtung ist an verschiedenen Stellen am Halterahmen 12 fixiert. Das Reduzierstück 2b von Anschlußteil 2 ist am Sechskant mit dem Halterahmen 12 verschweißt, die Befestigungsschelle 13 ist über das Befestigungsteil 15 (z. B. Zunge aus Flachstahl) und die Befestigungsschelle 14 am Halterahmen 12 befestigt. Die Verschweißung des Reduzierstückes 2b mit dem Halterahmen dient auch als Sicherung (Verdrehsicherung). Die verschraubten Teile 2b und 4 können sich somit nicht mehr durch Verdrehen lösen. Der Halterahmen 12 bietet auch den Vorteil, daß die nicht angeschlossene Probenahmevorrichtung 1 nicht von einer Unterlage wegrollen kann (Wegrollsicherung). Vorteilhaft kann der Halterahmen 12 mit einer Schutzvorrichtung für die Absperrorgane 6 und 8 ausgestattet werden. Beispielsweise wird der Halterahmen 12 mit einem weiteren Bügel (nicht gezeigt) versehen, der vorzugsweise parallel zur Längsachse des Probebehälters 7 und oberhalb der Absperrorgane 6 und 8 (das heißt in der Regel oberhalb der Handräder der Absperrventile) geführt wird, um die Absperrorgane 6 und 8 vor mechanischer Beschädigung zu schützen (Stoßsicherung; z. B. Schutz vor Abbrechen von Ventilen oder Ventilteilen).

Die gezeichneten Pfeile zeigen die Richtung des Gasflusses bei der Probenahme.

Nach dem Spülen der Vorrichtung mit dem Gas werden die Absperrorgane 6 und 8 geschlossen. Durch das Durchleiten des Gases durch die Verdampfungseinheit 5 wird sichergestellt, daß kein kälteverflüssigtes Gas in den Probebehälter 7 gelangt.

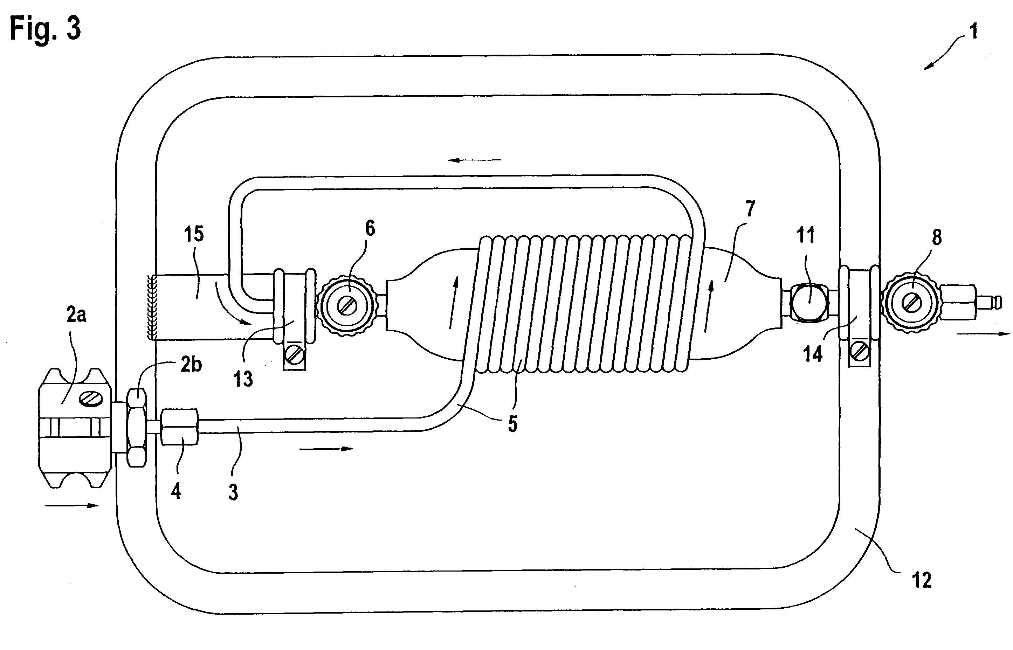

Das Schema der Vorrichtung in Fig. 3 (Draufsicht) ist in der Breite auseinandergezogen, um die Einzelheiten der Vorrichtung in der Zeichnung besser darstellen zu können. In Wirklichkeit sind die seitlich gelegenen Teile in nahem Abstand zum Probebehälter 7 angeordnet.

### Bezugszeichenliste

- 1: Vorrichtung zur Probenahme
- 2: Anschlußteil
- 2a: Anschlußkupplungsteil
- 2b: integriertes Reduzierstück mit Sechskant
- 3: Gasleitung
- 4: Strömungsbegrenzer (Drossel, Lochblende)
- 5: Verdampfungseinheit
- 6, 8: Absperrorgan
- 7: Probebehälter
- 9: Volumenstromsensor
- 10: Temperatursensor
- 11: Abblasvorrichtung
- 12: Halterahmen
- 13, 14: Befestigungsschelle
- 15: Befestigungszunge (Befestigungselement am Halterahmen)

## Patentansprüche

1. Vorrichtung (1) zur Probenahme eines Gases aus einem Behälter mit verflüssigtem Gas, gekennzeichnet durch eine vor einem Probebehälter (7) angeordnete Verdampfereinheit (5).

2. Vorrichtung nach Anspruch 1, dadurch gekennzeichnet, daß die Vorrichtung einen Strömungsbegrenzer (4) enthält.

3. Vorrichtung nach Anspruch 1 oder 2, dadurch gekennzeichnet, daß die Vorrichtung (1) ein Anschlußteil (2) mit integriertem Ventil enthält.

4. Vorrichtung nach einem der Ansprüche 1 bis 3, dadurch gekennzeichnet, daß die Vorrichtung (1) eine Verdampferschlange als Verdampfereinheit (5) enthält, die um den Probebehälter (7) angeordnet ist.

5. Vorrichtung nach einem der Ansprüche 1 bis 4, dadurch gekennzeichnet, daß die Vorrichtung (1) eine Abblaseinrichtung (11) enthält.

6. Vorrichtung nach einem der Ansprüche 1 bis 5, dadurch gekennzeichnet, daß die Vorrichtung (1) eine Halte- oder Stützvorrichtung (12) enthält.

7. Vorrichtung nach einem der Ansprüche 1 bis 6, dadurch gekennzeichnet, daß die Vorrichtung (1) steuerbare Absperrorgane (6, 8) enthält.

8. Vorrichtung nach einem der Ansprüche 1 bis 7, dadurch gekennzeichnet, daß die Vorrichtung (1) einen oder mehrere Sensoren (9, 10) zur Erfassung von Betriebszuständen und/oder zur Steuerung der Vorrichtung enthält.

9. Verfahren zur Gasprobenahme aus Behältern mit verflüssigtem Gas, dadurch gekennzeichnet, daß das Gas durch eine Verdampfereinheit (5) geleitet wird, die dem Probebehälter (7) vorgeschaltet ist.

10. Verwendung einer Vorrichtung gemäß Anspruch 1 bis 8 zur Gasprobenahme bei einem Tankfahrzeug mit kälteverflüssigtem und/oder druckverflüssigtem Gas.
